(19) Europäisches Patentamt
European Patent Office
Office européen des brevets

(11) **EP 4 646 582 B1**

(12) **EUROPEAN PATENT SPECIFICATION**

(45) Date of publication and mention
of the grant of the patent:
**18.02.2026 Bulletin 2026/08**

(21) Application number: **23720354.2**

(22) Date of filing: **21.03.2023**

(51) International Patent Classification (IPC):
**G01N 15/10** *(2024.01)*    **G01N 15/1429** *(2024.01)*
**G01N 15/14** *(2024.01)*    *G01N 15/01* *(2024.01)*

(52) Cooperative Patent Classification (CPC):
**G01N 15/1012; G01N 15/1429; G01N 15/1459;**
G01N 15/01; G01N 2015/1006; G01N 2015/1014

(86) International application number:
**PCT/IB2023/000140**

(87) International publication number:
**WO 2024/194666 (26.09.2024 Gazette 2024/39)**

(54) **METHOD OF FLUORESCENT DYE VARIATION COMPENSATION BY FREE STATE FLUORESCENCE MEASUREMENT**

VERFAHREN ZUR KOMPENSATION DER VARIATION EINES FLUORESZENZFARBSTOFFS DURCH FLUORESZENZMESSUNG IM FREIEN ZUSTAND

PROCÉDÉ DE COMPENSATION DE VARIATION DE COLORANT FLUORESCENT PAR UNE MESURE DE FLUORESCENCE À L'ÉTAT LIBRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**12.11.2025 Bulletin 2025/46**

(73) Proprietor: **BIT GROUP FRANCE**
**34099 Montpellier (FR)**

(72) Inventors:
• **MAGNIN, Olivier**
**38570 Theys (FR)**
• **GIRAUD, Jérôme**
**34980 Montferrier-sur-Lez (FR)**

(74) Representative: **IPAZ**
**Bâtiment Platon**
**Parc Les Algorithmes**
**91190 Saint-Aubin (FR)**

(56) References cited:
**US-A1- 2009 012 721    US-A1- 2010 314 557**
**US-A1- 2012 010 822    US-A1- 2012 056 103**

• **HOWARD M SHAPIRO: "Chapter 7: Parameters and Probes", PRACTICAL FLOW CYTOMETRY, 4TH EDITION, 1 January 2003 (2003-01-01), pages 273 - 410, XP055029087, ISBN: 978-0-47-141125-3, Retrieved from the Internet <URL:http://onlinelibrary.wiley.com/store/10.1002/0471722731.ch7/asset/ch7.pdf?v=1&t=h347f6p2&s=136e34e45cd61874c788e533f8eb9c6f96a9f76c> [retrieved on 20120606], DOI: 10.1002/0471722731.ch7**

**Description**

The present invention relates to fluorescence radiant intensity monitoring of a reagent containing a fluorescent dye used in flow cytometry. In the following, "fluorescence" refers to the luminescence radiant intensity or fluorescence emission radiant intensity.

Flow cytometry is a technique for in vitro characterization of blood cells. In a flow cytometer, blood cells are flowing one after another through a transducer that measures various parameters of said blood cells.

Measured parameters can rely on blood cells basic intrinsic features such as cell size, membrane roughness, nucleus lobes complexity or internal granularity.

Enhanced characterization of blood cells relies on the use of fluorescent markers. Those fluorescent markers can be chosen to be highly specific of a targeted blood cell feature such as blood cell nucleic acids content. Once excited, i.e illuminated at a specific wavelength, fluorescent probes re-emit fluorescent light thus allowing to check the presence of targeted blood cell feature and to quantify it.

Fluorescent dyes have been used for quite a long time in hematology, as this is the most accurate means for blood cells characterization.

In the early 1900s, the first uses of fluorophores in biological investigations were performed to stain tissues, bacteria, and other pathogens. This was later developed into fluorescence microscopy by Carl Zeiss and Carl Reichert. By the beginning of 1940s, fluorescence labeling was achieved by Ellinger and Hirt.

The use of fluorescent dye (Acridine Orange) in hematology has been reported in 1963 by Vander for characterization and counting of reticulocytes by visual microscopy.

US3,684,377 (Katmensky) discloses pioneering work on leukocytes characterization by fluorescence flow cytometry. US3,916,205 (Kleinerman) also discloses fluorescence flow cytometry for characterization and counting of white blood cells sub-populations, lymphocytes, monocytes, neutrophiles, eosinophiles, and other blood cells populations such as erythrocytes and reticulocytes.

The use of fluorescence measurements in flow cytometry has grown since those beginnings. All current flow cytometers provide at least multiple fluorescence emission channels, and multiple excitation light sources are now quite common.

Although they are a powerful tool to accurately discriminate all kinds of blood cells subpopulations, fluorescent dyes also exhibit drawbacks and are tricky to handle.

Because of their structure, fluorescent dyes are known to be fragile molecules subject to degradation through several environmental factors.

They are, for instance, sensitive to electromagnetic radiations: particularly sensitive at their excitation wavelengths, but also at those of higher energy that trigger their photodegradation.

They are also easily oxidized by oxygen in the air or by oxidizing agents (e.g. peroxides, some detergents or free radicals in solution).

Moreover, depending on their structure, some fluorochromes are known to be instable in aqueous solutions and to undergo a temperature enhanced hydrolysis leading to their progressive destruction over time. Byproducts absorb lower wavelengths and consequently won't emit fluorescence when illuminated by the instrument light source (and anyway fail to bind to nucleic acids) resulting in a drop of fluorescence radiant intensity that might lead to errors in blood cells characterization.

Hence, hydrolysis drastically limits (or reduces) shelf life of water-based fluorescence reagents.

This is even more true for certain types of fluorochromes like the heterocyclic polymethines which are the asymmetric cyanines. The latter, which have been used in medical diagnostics since the end of the 1980s, have nevertheless incomparable advantages over other more stable fluorescent probes, such as acridines or symmetrical cyanines, see for example Lee et al. US 4,957, 870.

Asymmetric cyanines, although they have a much lower emitted fluorescence radiant intensity than acridines (by a factor of about 20), show almost no free state fluorescence. This means that even when excited to their absorption maximum, asymmetric cyanines emit almost no fluorescence free in solution. On the contrary, when they are bound to their target (DNA or RNA) the amount of re-emitted fluorescence increases drastically, with a ratio of bound/free emitted fluorescence higher than 1000, while at the same time, acridines have a ratio barely higher than 1, and symmetrical cyanines about 3.

US 5,821,127 or US 5,891,731 are known for disclosing reagents enabling automated reticulocytes measurement. US 6,004,816 discloses reagents for leukocytes measurement for instance. Said documents, from Yasumasa et al, teach that the dye can advantageously be dissolved at a very high concentration in a water soluble, or miscible organic solvent to overcome dye instability in aqueous solution. Such solvents may include low order alcohols (ethanol, methanol), ethylene glycol, or dimethyl sulfoxide (DMSO). Indeed, in the absence of water, fluorochromes are stable in organic solution, when protected from photodegradation, and corresponding reagents exhibit long shelf lives (greater than one year or more), which is an undeniable commercial benefit.

This stable organic solution is further diluted and mixed extemporaneously when used to dye the blood sample in the instrument, with another water-based solution, which incorporates salts, osmolarity compensating agent, and eventually other components like a preservative, or a cationic detergent used as dyeing accelerator, or, in greater amount, to promote erythrolyse for leukocytes measurement; see for example EP 2 175 340.

Yet, the use of an organic concentrated dye solution has multiple drawbacks.

First of all, most of those organic solvents are not harmless: they are either flammable, suspected (or proven) harmful even toxic raw material either for human beings (manufacturing workforce, but also end users) or the aquatic life.

Besides they may be incompatible with instruments or packaging components (plastics, tubing, valves).

Moreover, the use of such reagents increases the number of containers required on the instrument, which unnecessarily impairs laboratory management as far as orders, inventory management, expiration monitoring, waste elimination, especially when reagent is classified, are concerned etc...

Finally, viscosity and density of concentrated organic dye solutions are different from those of water-based reagents. To ensure proper treatment of samples over time, mixing and homogenization of final working solution is mandatory. This requires an undesired complexification of instruments' fluidic lines and mixing means, leading to an increased cost and risk of breakdown.

Another possibility to get rid of the aging of the fluorochrome is to apply a numerical compensation factor as fluorescence is decreasing. The lower the fluorescence, the higher the numerical compensation factor.

The above compensation principle involves monitoring and quantifying the dye fluorescence decrease over time.

Compensation of degradation allows to increase shelf life of a reagent containing a fluorochrome without degradation of analytical performances.

US 9,448,175 discloses means for correction of fluorescence level of a fluorochrome by measurement of the optical density of said fluorochrome at a given wavelength. The measurement is based on optical density by spectrophotometry. Those means are specific for spectrophotometry and are additional to the means dedicated to fluorescence measurement of labeled particles. So two different measurement units are required by US 9,448,175 ; one for spectrophotometric measurement of optical density of the fluorochrome, and another for fluorescence measurement of labeled particles. US 9,448,175 clearly discloses optical density as the relevant parameter for monitoring the decay of the fluorochrome. No other parameter is disclosed for monitoring that decay.

Hulspas, "Flow Cytometry and the Stability of Phycoerythrin-Tandem Dye Conjugates", Cytometry Part A volume 75A, 11 nov 2009, p966-972, discloses means to compensate for variability in emission spectra of tandem dyes bound to proteins. Hulspas discloses variations of spectral properties of the two components (donor and acceptor) of a tandem dye. In particular, Hulspas investigated the effect of tandem dye instability on compensation matrix values over an extended period of time (p. 969, Col. 2). Spectral compensation is necessary only when multiple fluorochromes are simultaneously used. In that case the multiple fluorescence light emission spectra are overlapping (spillover) and compensation matrix is used to minimize spillover effects. Hulspas discloses a simulation accomplished by determining a compensation matrix for each time point of the particle-bound tandem dye sets. Hulspas uses compensation matrix dealing with spillover between multiple tandem dyes spectra.

US 2012/010822 A1 (Yasunobu) discloses spectral compensation between the different wavelength bands of multiple fluorescence measurement channels when several fluorochromes are simultaneously used.

The purpose of the present invention is to propose a method for quantification and/or for compensation of bound state (i.e. when fluorochrome is bound to a blood cell) fluorescence radiant intensity variation of a reagent containing a fluorochrome .

Another purpose of the present invention is a new method of determining a compensation factor for variation of fluorescence radiant intensity of the reagent.

The present invention also intends to provide a simple, efficient and fast method to compensate for the fluorescence radiant intensity variation.

At least one of the above-mentioned purposes is achieved with a method of determining a compensation factor to compensate for variations of fluorescence radiant intensity of a reagent containing a fluorochrome according to claim 1.

The present invention can advantageously be used to compensate for the variation of fluorescence radiant intensity of a reagent containing a fluorochrome due to fluorochrome aging or due to reagent composition fluctuations between batches. The composition fluctuations can comprise chemical/process fluctuations or fluctuations due to conditions of storage/transportation.

During a free state fluorescence measurement, the fluorochrome is not labeled to a cell. On the contrary, measuring the fluorescence of a cell labelled with the fluorochrome is a bound state fluorescence measurement.

The free state fluorescence measurement is performed on a reagent containing the fluorochrome; said reagent being then used to label the cells.

The method according to the invention uses the dye free-state fluorescence parameter, when the dye is not bound, to monitor and compensate for fluorescence radiant intensity variation of the dye in subsequent measurements where said dye is used at bound-state. A subsequent measurement is for example a cell characterization.

Fluorescent molecules (or dyes) used in flow cytometry have two main characteristics: the ability to bind to a specific feature of blood cells, and the ability to re-emit light when properly excited (fluorescence). It is known that fluorescent dyes are subject to degradation over time through several environmental factors. That is to say, some molecules of the dye will break down over time into several parts because of environmental factors. If the structure of the molecule is broken, it loses both its ability to bind to a specific feature of blood cells and its ability to re-emit light when properly excited (fluorescence).

The inventors of the present invention noticed that the loss of fluorescence due to molecular break down holds both for the dye free-state (not bound to blood cell feature) and bound-state (bound to a specific feature of blood cells) of the dye.

According to the invention, the decrease of dye free-state fluorescence also reflects the decrease of bound-state fluorescence. It is thus possible to monitor bound-state fluorescence decrease of the dye from measurement performed on its free-state fluorescence.

In particular, it is possible to derive compensation algorithms for variation of its bound-state fluorescence radiant intensity by monitoring and quantifying its free-state fluorescence radiant intensity evolution.

The present invention enables to effectively quantify and/or compensate for the fluorescence radiant intensity decrease of a reagent containing a fluorochrome as said fluorochrome is aging.

On the contrary, the prior art such as document US9448175 monitors a parameter that is the optical density; this is not free state fluorescence.

The optical density is defined as the logarithm of the ratio of incident to transmitted radiant power through a sample.

The excitation wavelength and the detection wavelength are identical. In the present invention, we directly measure the free state fluorescence of the dye used in the free (unbound) state with, for example, the same optical system as that is used to measure the fluorescence re-emitted by the fluorochrome bound to the cells. It is not an optical density (sample light transmission at a given wavelength) insofar as, when excited by an illumination source, the fluorescence light is re-emitted by the fluorochrome at a wavelength greater than that of the illumination source. The excitation spectrum and the emission spectrum are different.

The prior art method requires additional specific hardware to monitor Optical Density of the fluorochrome. The dye free state fluorescence parameter used to monitor bound-state fluorescence decrease does not require the use of any calibrating material (particle, proteins, nucleic acid, calibrating material...).

In the present invention, the same class of physical phenomenon (light emission) is measured for quantification of dye free-state fluorescence variation and for final dye bound-state measured parameter used for blood cells characterization.

Measurement of optical density of the fluorochrome disclosed by US 9,448,175 is subject to multiple determination errors. Spectrophotometric measurement of a substance can be disrupted by many causes : absorption and/or scattering by other particles, impurities, bubbles, non-homogeneities,... in that substance.

Unlike absorption, fluorescence light emission has no risk of being disrupted or impaired by impurities or non-homogeneities; this is a much more rugged parameter.

According to an embodiment, the invention can comprise at least two free state fluorescence radiant intensity measurements realized at different times prior to the bound state fluorescence radiant intensity measurement; the compensation factor being determined from values of the measured free state fluorescence radiant intensity.

The invention provides for carrying out several free-state fluorescence measurements to obtain several values in order to accurately derive a bound-state variation compensation factor. The person skilled in the art can determine different suitable moments to perform the free-state fluorescence measurements knowing average variation rate of the fluorochrome.

In particular, one free state fluorescence radiant intensity measurement can be realized at a time t1 after the manufacture of a reagent containing the fluorochrome, and another free state fluorescence measurement can be realized at a time t2, after t1 but before the bound state fluorescence radiant intensity measurement, the duration between t1 and t2 being greater than at least the duration between t2 and the bound state fluorescence radiant intensity measurement.

The present invention provides for carrying out a first free state fluorescence radiant intensity measurement just after the manufacture of the reagent containing the fluorochrome; and a second free state fluorescence measurement shortly before the fluorescence measurement of a cell labeled with the fluorochrome. These two measurements at appropriate times allow to accurately determine the compensation factor.

The US 9,448,175 also requires two measurements but based on optical density measurement. The compensation factor in US 9,448,175 is based on the change, i.e. variation, of optical density, so two different measurements of optical density are absolutely required. On the contrary, the present invention proposes here below other solutions that can require only one single measurement.

According to a preferred embodiment of the invention, the compensation factor can be determined from a predetermined normalization function $\Phi_N$; at least a value of the measured free state fluorescence radiant intensity of the reagent containing the fluorochrome being at least an argument of the predetermined normalization function $\Phi_N$.

According to the invention, the values of free state fluorescence radiant intensity measurements of the reagent containing the fluorochrome can be used as arguments of a normalization function used as variation compensation factor for subsequent bound state fluorescence radiant intensity measurements.

Advantageously, a value of only one single measured free state fluorescence radiant intensity of the reagent containing the fluorochrome can be a single argument of the predetermined normalization function $\Phi_N$.

With the present invention, one single free-state fluorescence radiant intensity measurement of the reagent containing the fluorochrome is used as the single argument of the normalization function $\Phi_N$. This scheme does not rely on estimating the free sate fluorescence radiant intensity variation, it is a systematic normalization of the dye bound-state fluorescence level by the normalization function $\Phi_N$.

The normalization function according to the invention only requires one single measurement of one characteristic of the dye, its free state fluorescence radiant intensity, to derive the fluorescence compensation factor required for subsequent measurements where dye is bound to blood cells.

This eliminates the need for initial measurement of the fluorochrome characteristics just after the manufacture, thus greatly relaxing constraints on the manufacturing process.

Any subsequent bound-state fluorescence measurement, i.e. when dye is bound to blood cells, is normalized by a function $\Phi_N$ that has one single argument: the previously measured free-state fluorescence radiant intensity.

According to an embodiment of the invention, the predetermined normalization function $\Phi_N$ can be a polynomial function, a ratio of polynomial functions, an exponential function, a logarithmic function, a hyperbolic function, or a combination thereof. It can also be defined by parts, i.e. different analytical definitions for different ranges of its single argument.

According to a preferred embodiment of the invention, a free state fluorescence radiant intensity measurement can be realized on a first reagent sample; the bound state fluorescence radiant intensity measurement can be realized on a second reagent sample, the first reagent sample and the second reagent sample coming from a single container containing the fluorochrome.

In other words, the first reagent sample and the second reagent sample come from a same reagent.

Another purpose of the invention is to use the above disclosed compensation mechanism based on free state fluorescence measurement to compensate for bound state fluorescence radiant intensity variations of the fluorescent reagent between manufacturing batches.

During the fluorescent reagent manufacturing process, slight variations of reagent composition, for example fluorochrome concentration, may occur due to raw material purity variability or human and environmental factors (cumulated weighing, filling measuring imprecisions).

Although all manufactured batches meet predetermined acceptance criteria defined for the fluorescent reagent, the free state fluorescence radiant intensity compensation of present technique enables to further smoothen slight variations of bound state fluorescent radiant intensity that might persist and ensure even better final results consistency.

Determination of compensation factor from free state fluorescence radiant intensity measurement enables to normalize results and obtained fluorescence dot plots when priming a new bottle of fluorescent dye containing reagent, regardless of its age, or slight change in composition, in particular fluorochrome concentration.

The composition of the first and the second reagents can be the same or slightly different as, for example, they can be manufactured at different times, at different regions, from different components...

The present invention can comprise several steps of measuring a free state fluorescence radiant intensity of the reagent containing the fluorochrome in order to precisely monitor the fluorescence radiant intensity variations.

According to a preferred embodiment of the invention, a same optical transducer can both be used for measuring the free state fluorescence radiant intensity and for measuring the bound state fluorescence radiant intensity. This ensures there cannot be any measurement bias between determination of variation of free-state fluorescence radiant intensity and final fluorescence radiant intensity measurement of fluorochrome bound to blood cells.

However, another dedicated transducer can be used.

The spectrophotometric measurement of optical density of the fluorochrome disclosed in US 9,448,175 requires additional means. This requires at least one dedicated light source, a photodetector and the acquisition chain to perform this measurement. With the present invention, a same optical transducer can be used both for derivation of the compensation factor and for final measurement. This leads to cheaper, more compact and more rugged instrument.

According to an embodiment of the invention, a same excitation spectrum can be used for measuring the free state fluorescence radiant intensity and for measuring the bound state fluorescence radiant intensity.

According to an embodiment of the invention, a same emission wavelengths range can be used for measuring the free state fluorescence radiant intensity and for measuring the bound state fluorescence radiant intensity.

According to an embodiment of the invention, the concentration of fluorochrome used for measuring the free state fluorescence radiant intensity and for measuring the bound state fluorescence radiant intensity can be either the same or different.

With the present invention, the same transducer can be used for free state fluorescence radiant intensity measurement and final bound state fluorescent radiant intensity measurement for cells characterization. Thus, both free state fluorescence radiant intensity measurement and final bound state fluorescence radiant intensity measurements can have same excitation and emission spectra conditions. This improves measurement consistency between decay monitoring of the fluorochrome free-state fluorescence and final fluorescence measurement of the dye bound to blood cells.

According to an embodiment of the invention, the step of measuring the free state fluorescence radiant intensity can be realized from a reagent containing one single fluorochrome.

In another embodiment the step of measuring the free state fluorescence radiant intensity is realized from a reagent containing at least two fluorochromes. Depending on fluorochromes excitation and emission spectra, it can be necessary to add an additional illumination module and/or detection module to the above embodiment.

If fluorochromes contained in the reagent cannot be excited by the same light source because light source and fluorochrome excitation spectra are not compatible, it is necessary to add at least one illumination module so that each fluorochrome is excited with an illumination module that has a spectrum compatible with its excitation spectrum.

If fluorochromes contained in the reagent have emission spectra that are not compatible with wavelength range of one single fluorescence measurement module, it is necessary to add at least one fluorescence measurement module so that fluorescence emission of each fluorochrome is measured with a module that has a bandwidth compatible with its emission spectrum.

The present invention also concerns an optical flow cytometer according to claim 16.

Further advantages and characteristics of the invention will become apparent on examining the detailed description of an embodiment, which is in no way limitative, and the attached drawings, in which:

Figure 1 is a global view illustrating components of an optical flow cytometer that can be used to perform the method according to the invention;

Figure 2 is a flow chart that illustrates a method of determining a compensation factor according to the present invention;

Figure 3 is a graphical illustration of the free state fluorescence decay;

Figure 4 is a graphical illustration of the bound state fluorescence decay;

Figures 5a and 5b are illustrations of the bound state fluorescence level measured at t=0, without and with a compensation ; and

Figures 6a and 6b are illustrations of the bound state fluorescence level measured at t=10 months, without and with a compensation.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications falling within the scope of the present invention as defined by the appended claims.

Hereinafter, the present invention will be described in detail by explaining exemplary embodiments of the invention with reference to the attached drawings.

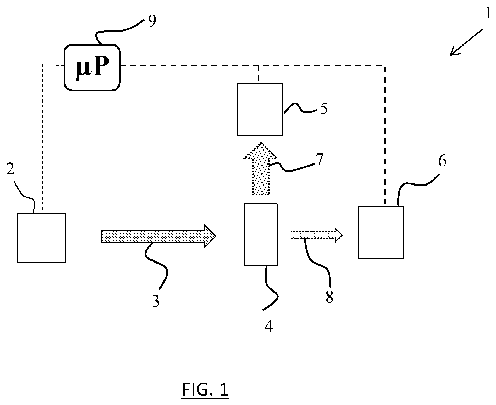

FIG. 1 is a global view illustrating components of an optical flow cytometer that can be used to perform the method according to the invention.

Referring to FIG. 1, the inventive optical flow cytometer 1 includes an illumination module 2 for generating an illumination beam 3 towards a flowcell 4where particles such as blood cells are flowing. The optical flow cytometer 1 comprises electromotive or/and other means to drive and focus sample cells or blood cells into a flow which is surrounded, or not, by sheath fluid. The blood cells circulate through the flowcell 4.

The illumination beam 3 is focused and directed across the cells flow and induces fluorescence of fluorescent sample particles or of their markers. The fluorescence light 7 generated by the tagged blood cells is collected by the fluorescence measurement module 5.

The illumination beam 3 also induces scattering light 8 as blood cells pass the optical interrogation zone. The optical flow cytometer 1 comprises a scattering measurement module 6 provided for collecting scattering light 8 coming from the flowcell 4.

A processing unit 9 is provided to control the excitation module 2 for the excitation signal. The processor unit 7 also controls the fluorescence measurement module 5 and the scattering measurement module 6 in order to detect a direct and/or indirect scattering signal.

In the embodiment of figure 1, the scattering measurement module 6 is arranged at opposite side of the illumination module 2 and the fluorescence measurement module 5 is arranged at 90° from the optical axis of the illumination beam. Other arrangements can be done by including mirror, lens and/or beam splitter to deviate lights.

The present invention also concerns an epifluorescence configuration, not shown, where the excitation module 2 may comprise the fluorescence measurement module 5. In such a configuration, the same focalization lens is used to focalize excitation beam on the flowcell and to collect fluorescence light from the flowcell.

According to the invention, the fluorescence measurement module 5 is preferably an optical transducer that is used for measuring free state fluorescence and bound state fluorescence.

The processing unit 9, such as a microprocessor, is configured to implement the method according to the invention.

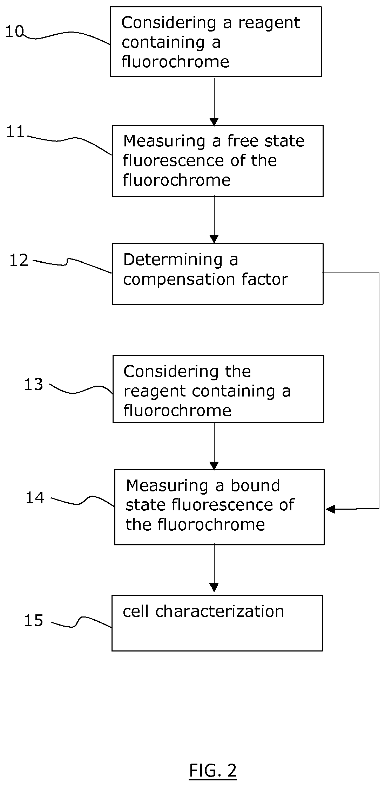

Figure 2 is a flow chart that illustrates a method of determining a compensation factor according to the present invention.

The apparatus as described on figure 1 can be used to perform the method according to the invention.

A first sequence according to the invention concerns the measurement of the free state fluorescence. At step 10, a reagent containing the fluorochrome is considered in the apparatus.

At step 11, the processing unit 9 on figure 1 drives different components of the apparatus 1 to measure the free state fluorescence of the fluorochrome contained in the reagent.

The optical transducer 5 receives fluorescence signal that is processed to determine at step 12 a value of fluorescence radiant intensity

Several measurements can be made between the manufacture of the reagent and the next bound state fluorescence measurement. As known by skilled person, a function can be derived from several values and a compensation factor can be identified each time a bound state fluorescence measurement is provided.

The compensation factor can be a fixed value determined shortly before performing a bound state fluorescence measurement. The compensation factor can also be a function that varies with time.

A single free state fluorescence measurement can also be made during step 11 and a value of fluorescence can be calculated. At step 12, the compensation factor is determined from a predetermined normalization function $\Phi_N$. The calculated value of fluorescence is used as a single argument of the predetermined normalization function $\Phi_N$.

At step 13, the user is ready to use the optical flow cytometer 1, for example, for characterizing by fluorescence different types of cells present in the blood. Such a device can be designed for counting for example the number of leukocytes contained in a blood sample and for determining their relative distribution within various subpopulations based on light scattering and fluorescence.

At step 13, the reagent is introduced into the blood. This reagent contains the fluorochrome for which a compensation factor has been determined based on several free state fluorescence measurements or a single free state fluorescence measurement.

At step 14, a bound state fluorescence measurement is performed taking into account the compensation factor calculated during the free state fluorescence measurement.

To do that, the illumination module 2 generates an excitation light towards the flowcell 3. The fluorescence light from the blood cells is collected by the optical transducer 5. The processing unit 9 calculates a value of fluorescence taking into account the compensation factor. This value is a useful information for blood cells characterization at step 15.

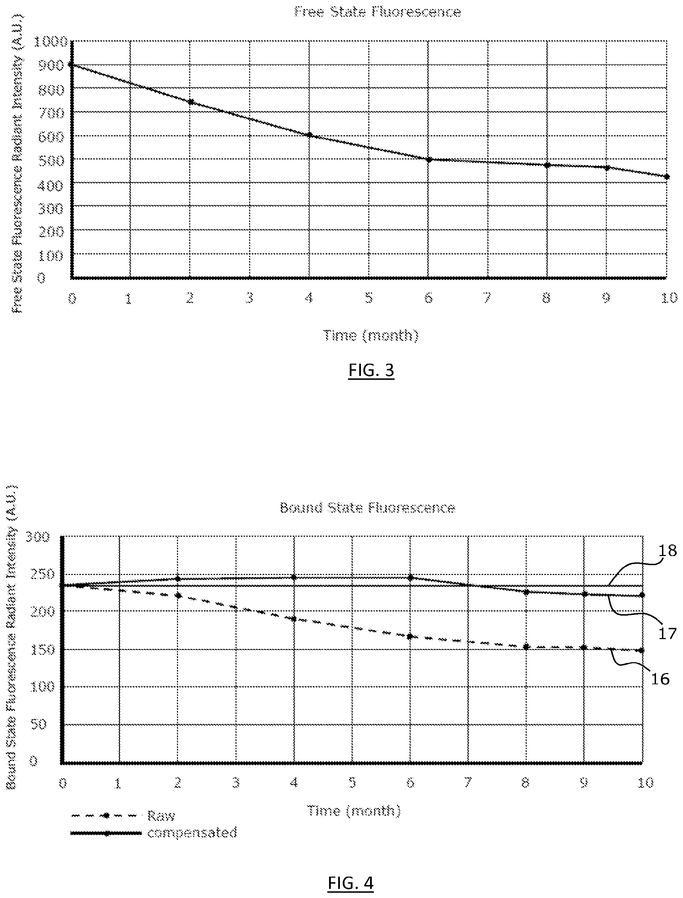

Figure 3 is a graphical illustration of the free state fluorescence decay. In this example, several free state fluorescence measurements have been performed. Several values of fluorescence radiant intensity (with arbitrary unit) have been calculated. Said values enable to draw a curve, a function that varies with time. It can be seen that the level is about 900 at t=0 month, i.e. shortly after the manufacture of the reagent containing the fluorochrome. The level drops to 500 at t=6 months, and 450 at t=10 months.

The decay of fluorochrome free-state fluorescence radiant intensity reflects the decrease of its bound-state fluorescence. The monitoring of the bound-state fluorescence decay of the fluorochrome is therefore possible from measurement performed on its free-state fluorescence.

Figure 4 is a graphical illustration of the bound state fluorescence decay of the fluorochrome of figure 3. The curve 16 illustrates the evolution of the fluorescence radiant intensity without compensation, i.e. raw data. Several bound state fluorescence measurements have been performed at the same times as the free state fluorescence of figure 3. Several values of fluorescence radiant intensity (with arbitrary unit) have been calculated. Said values enable to draw a curve, a function that varies with time. It can be seen that the level is about 237 at t=0 month, i.e. shortly after the manufacture of the reagent containing the fluorochrome. The level drops to 175 at t=6 months, and 150 at t=10 months. The evolution of the bound state fluorescence, without compensation, corresponds to that of the free state fluorescence. In particular, it is possible to derive compensation algorithms for the decay of its bound-state fluorescence by monitoring and quantifying its free-state fluorescence decay.

For each measurement of the free state fluorescence radiant intensity and the bound state fluorescence radiant intensity, at t=0; 2; 4; 6; 8; 9 and 10 months, a compensation factor is calculated. The curve 17 on figure 4 illustrates the evolution of the fluorescence radiant intensity with compensation, i.e. compensated data. It can be seen that curve 17 varies around the initial value 237 represented by the curve 18.

According to the invention, a predetermined normalization function $\Phi_N$ can be used for determining a compensation factor. An example of such a normalization function is:

$$\Phi_N ( t, t_0 ) = \alpha * \text{Fluo}_{\text{free}} ( t_0 ) / \text{Fluo}_{\text{free}} ( t ) + \beta ,$$

where $\alpha$ and $\beta$ are two coefficients depending on the used fluorochrome, $\text{Fluo}_{\text{free}}$ is the free state fluorescence radiant intensity, and t the time.

The compensation can be applied by using the following equation:

$$\text{Fluo}_{\text{Bound Compensated}} ( t ) = \text{Fluo}_{\text{Bound Raw}} ( t ) * \Phi_N ( t, t_0 )$$

where $\text{Fluo}_{\text{Bound Compensated}}$ (t) is the compensated value of the bound state fluorescence radiant intensity, $\text{Fluo}_{\text{Bound Raw}}$ is the non-compensated value of the bound state fluorescence radiant intensity, and t the time.

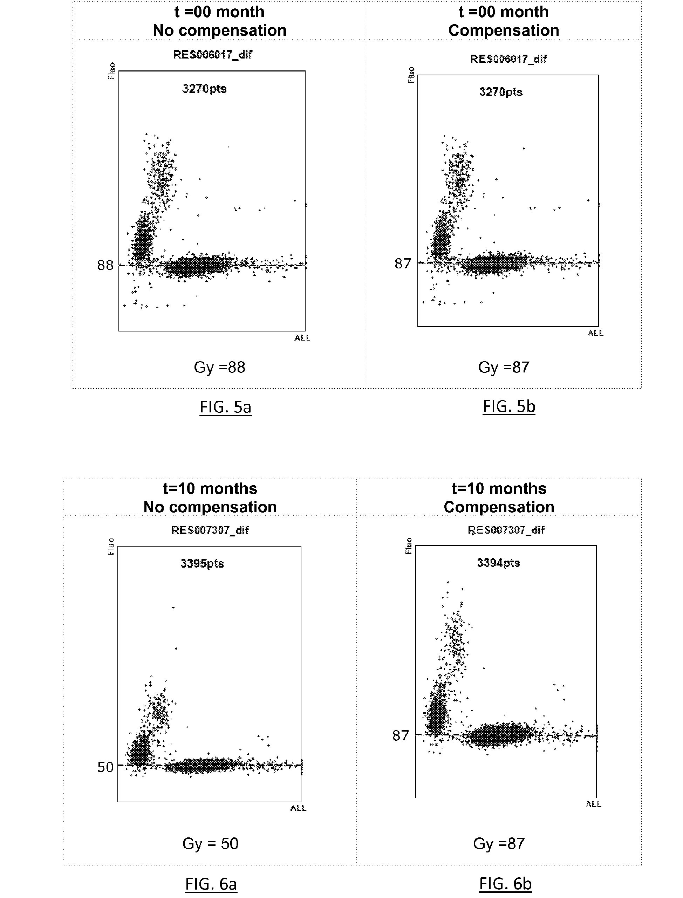

Figures 5-6 show images of different bound state fluorescence radiant intensity measurements of blood cells labeled with a fluorochrome. Said fluorochrome is contained in a reagent used in a flow cytometer for characterizing blood cells populations. Gy is the Y value (i.e. the coordinate along Fluo axis) of gravity center of {Neutrophiles + Eosinophils} populations.

Figure 5a is an image of fluorescence dots illustrating the bound state fluorescence radiant intensity measured at t=0 month. There is no compensation and Gy=88. This measurement corresponds to raw data at t=0.

Figure 5b is an image of fluorescence dots illustrating the bound state fluorescence radiant intensity measured at t=0 month. In this case, there is a compensation and Gy=87. The compensation factor is very close to 1 so that it has no effect.

Figure 6a is an image of fluorescence dots illustrating the bound state fluorescence radiant intensity measured at t=10 months. There is no compensation and Gy=50. This measurement illustrates the decay along Y axis with respect the measurement at t=0. To compensate for this decay, a compensation factor is applied on figure 6b.

Figure 6b is an image of fluorescence dots illustrating the bound state fluorescence radiant intensity measured at t=10 month. In this case, there is a compensation and Gy=87, the same as in figure 5b. The compensation factor is well greater than 1 so that it corrects the drop along Y axis.

For example, the present invention can be used to compensate for variation of fluorescence radiant intensity between reagent batches. To do that, the measurement of the free state fluorescence radiant intensity can be carried out automatically when replacing the bottle (prime) on the instrument, such as a cytometer.

If a bottle A is already installed on the instrument, at least one measurement of the free state radiant intensity can be made during its installation to determine the specific compensation factor of this batch at this age. And potentially other measures can be made to correct the compensation factor if necessary (in the case where the bottle remained on the instrument for a long time)...

When changing from bottle A to bottle B (from the same batch or from a different batch, younger or older, it doesn't matter), a new measurement of the fluorescence free state radiant intensity is carried out: the fluorescence compensation factor on the instrument is then adapted if necessary. This new measure eliminates:

- "chemical" variation (purity of the fluorochrome used, variability of weighings of compounds of the reagent, and of the level of the tank in the production process)
- "temporal" variation (relative age of the two bottles),
- "environmental" variation (temperatures and storage conditions of the bottles.

**Claims**

1. Method of determining a compensation factor to compensate for variations of fluorescence radiant intensity of a reagent containing a fluorochrome, the compensation factor being intended to be applied during a bound state fluorescence radiant intensity measurement when a cell is labeled with the fluorochrome, the method **characterized by** at least the steps of:

    - measuring (11) a free state fluorescence radiant intensity emitted by the reagent containing the fluorochrome when not labeled to a cell prior to the bound state fluorescence radiant intensity measurement; free state being a state when fluorochrome is not bound to a cell, and bound state being a state when fluorochrome is bound to a cell,
    - determining (12) the compensation factor from the measured free state fluorescence radiant intensity.

2. Method according to claim 1, **characterized in that** it comprises at least two free state fluorescence radiant intensity measurements realized at different times prior to the bound state fluorescence radiant intensity measurement; the compensation factor being determined from values of the measured free state fluorescence radiant intensity.

3. Method according to claim 2, **characterized in that** one free state fluorescence radiant intensity measurement is realized at a time t1 after the manufacture of a reagent containing the fluorochrome, and **in that** another free state fluorescence measurement is realized at a time t2, after t1 but before the bound state fluorescence radiant intensity measurement, the duration between t1 and t2 being greater than at least the duration between t2 and the bound state fluorescence radiant intensity measurement.

4. Method according to claim 1, **characterized in that** the compensation factor is determined from a predetermined normalization function $\Phi_N$; at least a value of the measured free state fluorescence radiant intensity of the reagent containing the fluorochrome being at least an argument of the predetermined normalization function $\Phi_N$.

5. Method according to claim 4, **characterized in that** a value of only one single measured free state fluorescence radiant intensity of the reagent containing the fluorochrome is a single argument of the predetermined normalization function $\Phi_N$.

6. Method according to claim 4 or 5, **characterized in that** the predetermined normalization function $\Phi_N$ comprises a polynomial function, a ratio of polynomial functions, an exponential function, a logarithmic function, a hyperbolic function, or a combination thereof.

7. Method according to any of claims 4 to 6, **characterized in that** the predetermined normalization function $\Phi_N$ is defined by parts.

8. Method according to any of preceding claims, **characterized in that** a free state fluorescence radiant intensity measurement is realized on a first reagent sample; the bound state fluorescence radiant intensity measurement is realized on a second reagent sample, the first reagent sample and the second reagent sample coming from a single container containing the fluorochrome.

9. Method according to any of preceding claims, **characterized in that** several steps of measuring a free state fluorescence radiant intensity are realized to monitor the fluorescence radiant intensity decrease.

10. Method according to any of preceding claims, **characterized in that** a same optical transducer is both used for measuring the free state fluorescence radiant intensity and for measuring the bound state fluorescence radiant intensity.

11. Method according to any of preceding claims, **characterized in that** a same excitation spectrum is used for measuring the free state fluorescence radiant intensity and for measuring the bound state fluorescence radiant intensity.

12. Method according to any of preceding claims, **characterized in that** a same emission wavelengths range is used for measuring the free state fluorescence radiant intensity and for measuring the bound state fluorescence radiant intensity.

13. Method according to any of preceding claims, **characterized in that** the concentration of fluorochrome used for measuring the free state fluorescence radiant intensity and for measuring the bound state fluorescence radiant intensity is either the same.

14. Method according to any of preceding claims, **characterized in that** the step of measuring the free state fluorescence radiant intensity is realized from a reagent containing one single fluorochrome.

15. Method according to any of claims 1 to 13, **characterized in that** the step of measuring the free state fluorescence radiant intensity is realized from a reagent containing at least two fluorochromes; and **in that**:

at least one illumination modules is used so that each fluorochrome is excited with an illumination module that has a spectrum compatible with its excitation spectrum, and/or
at least one fluorescence measurement modules is used so that fluorescence emission of each fluorochrome is measured with a module that has a bandwidth compatible with its emission spectrum.

**16.** Optical flow cytometer (1) comprising a processing unit (9) configured to:

- measure a free state fluorescence radiant intensity of a fluorochrome contained in a reagent, free state being a state when fluorochrome is not bound to a cell,
- determine a compensation factor from the measured free state fluorescence radiant intensity,
- measure the bound state fluorescence radiant intensity of a cell labeled with the fluorochrome, bound state being a state when fluorochrome is bound to a cell, and
- apply the compensation factor on the measured bound state fluorescence radiant intensity.

**Patentansprüche**

**1.** Verfahren zum Bestimmen eines Kompensationsfaktors, um Schwankungen einer Fluoreszenzstrahlungsintensität eines Reagenzes, das ein Fluorochrom enthält, zu kompensieren, wobei der Kompensationsfaktor vorgesehen ist, um während einer Fluoreszenzstrahlungsintensitätsmessung in einem gebundenen Zustand angewendet zu werden, wenn eine Zelle mit dem Fluorochrom markiert ist, wobei das Verfahren **gekennzeichnet ist durch** mindestens die Schritte:

- Messen (11) einer Fluoreszenzstrahlungsintensität in einem freien Zustand, die durch das Reagenz, das das Fluorochrom enthält, emittiert wird, wenn es vor der Fluoreszenzstrahlungsintensitätsmessung in dem gebundenen Zustand keine Zelle markiert; wobei der freie Zustand ein Zustand ist, wenn das Fluorochrom nicht an eine Zelle gebunden ist, und der gebundene Zustand ein Zustand ist, wenn das Fluorochrom an eine Zelle gebunden ist,
- Bestimmen (12) des Kompensationsfaktors aus der gemessenen Fluoreszenzstrahlungsintensität in dem freien Zustand.

**2.** Verfahren nach Anspruch 1, **dadurch gekennzeichnet, dass** es mindestens zwei Fluoreszenzstrahlungsintensitätsmessungen in dem freien Zustand, die zu unterschiedlichen Zeitpunkten vor der Fluoreszenzstrahlungsintensitätsmessung in dem gebundenen Zustand realisiert werden, umfasst; wobei der Kompensationsfaktor aus Werten der gemessenen Fluoreszenzstrahlungsintensität in dem freien Zustand bestimmt wird.

**3.** Verfahren nach Anspruch 2, **dadurch gekennzeichnet, dass** eine Fluoreszenzstrahlungsintensitätsmessung in dem freien Zustand zu einem Zeitpunkt t1 nach der Herstellung eines Reagenzes, das das Fluorochrom enthält, realisiert wird und dass eine andere Fluoreszenzstrahlungsintensitätsmessung in dem freien Zustand zu einem Zeitpunkt t2, nach t1, aber vor der Fluoreszenzstrahlungsintensitätsmessung in dem gebundenen Zustand, realisiert wird, wobei die Dauer zwischen t1 und t2 größer als mindestens die Dauer zwischen t2 und der Fluoreszenzstrahlungsintensitätsmessung in dem gebundenen Zustand ist.

**4.** Verfahren nach Anspruch 1, **dadurch gekennzeichnet, dass** der Kompensationsfaktor aus einer zuvor bestimmten Normierungsfunktion $\Phi_N$ bestimmt wird; wobei mindestens ein Wert der gemessenen Fluoreszenzstrahlungsintensität in dem freien Zustand des Reagenzes, das das Fluorochrom enthält, mindestens ein Argument der zuvor bestimmten Normalisierungsfunktion $\Phi_N$ ist.

**5.** Verfahren nach Anspruch 4, **dadurch gekennzeichnet, dass** ein Wert nur einer einzigen gemessenen Fluoreszenzstrahlungsintensität in dem freien Zustand des Reagenzes, das das Fluorochrom enthält, ein einziges Argument der zuvor bestimmten Normalisierungsfunktion $\Phi_N$ ist.

**6.** Verfahren nach Anspruch 4 oder 5, **dadurch gekennzeichnet, dass** die zuvor bestimmte Normalisierungsfunktion $\Phi_N$ eine Polynomfunktion, ein Verhältnis von Polynomfunktionen, eine Exponentialfunktion, eine Logarithmusfunktion, eine Hyperbelfunktion oder eine Kombination davon umfasst.

**7.** Verfahren nach einem der Ansprüche 4 bis 6, **dadurch gekennzeichnet, dass** die zuvor bestimmte Normalisierungsfunktion $\Phi_N$ durch Teile definiert ist.

**8.** Verfahren nach einem der vorstehenden Ansprüche, **dadurch gekennzeichnet, dass** eine Fluoreszenzstrahlungsintensitätsmessung in dem freien Zustand an einer ersten Reagenzprobe realisiert wird; wobei die Fluoreszenzstrahlungsintensitätsmessung in dem gebundenen Zustand an einer zweiten Reagenzprobe realisiert wird, wobei die erste Reagenzprobe und die zweite Reagenzprobe aus einem einzigen Behälter, der das Fluorochrom enthält, stammen.

9. Verfahren nach einem der vorstehenden Ansprüche, **dadurch gekennzeichnet, dass** mehrere Schritte des Messens einer Fluoreszenzstrahlungsintensität in dem freien Zustand realisiert werden, um die Abnahme der Fluoreszenzstrahlungsintensität zu überwachen.

10. Verfahren nach einem der vorstehenden Ansprüche, **dadurch gekennzeichnet, dass** ein gleicher optische Wandler sowohl zum Messen der Fluoreszenzstrahlungsintensität in dem freien Zustand als auch zum Messen der Fluoreszenzstrahlungsintensität in dem gebundenen Zustand verwendet wird.

11. Verfahren nach einem der vorstehenden Ansprüche, **dadurch gekennzeichnet, dass** ein gleiches Anregungsspektrum zum Messen der Fluoreszenzstrahlungsintensität in dem freien Zustand und zum Messen der Fluoreszenzstrahlungsintensität in dem gebundenen Zustand verwendet wird.

12. Verfahren nach einem der vorstehenden Ansprüche, **dadurch gekennzeichnet, dass** ein gleicher Emissionswellenlängenbereich zum Messen der Fluoreszenzstrahlungsintensität in dem freien Zustand und zum Messen der Fluoreszenzstrahlungsintensität in dem gebundenen Zustand verwendet wird.

13. Verfahren nach einem der vorstehenden Ansprüche, **dadurch gekennzeichnet, dass** die Konzentration von Fluorochrom, das zum Messen der Fluoreszenzstrahlungsintensität in dem freien Zustand und zum Messen der Fluoreszenzstrahlungsintensität in dem gebundenen Zustand verwendet wird, auch gleich ist.

14. Verfahren nach einem der vorstehenden Ansprüche, **dadurch gekennzeichnet, dass** der Schritt des Messens der Fluoreszenzstrahlungsintensität in dem freien Zustand aus einem Reagenz, das ein einziges Fluorochrom enthält, realisiert wird.

15. Verfahren nach einem der Ansprüche 1 bis 13, **dadurch gekennzeichnet, dass** der Schritt des Messens der Fluoreszenzstrahlungsintensität in dem freien Zustand aus einem Reagenz, das mindestens zwei Fluorochrome enthält, realisiert wird; und dass:

mindestens ein Beleuchtungsmodul verwendet wird, sodass jedes Fluorochrom mit einem Beleuchtungsmodul angeregt wird, das ein Spektrum, das mit seinem Anregungsspektrum kompatibel ist, aufweist, und/oder mindestens ein Fluoreszenzmessmodul verwendet wird, sodass eine Fluoreszenzemission jedes Fluorochroms mit einem Modul gemessen wird, das eine Bandbreite, die mit seinem Emissionsspektrum kompatibel ist, aufweist.

16. Optisches Durchflusszytometer (1), umfassend eine Verarbeitungseinheit (9), die konfiguriert ist zum:

- Messen einer Fluoreszenzstrahlungsintensität in dem freien Zustand eines Fluorochroms, das in einem Reagenz enthalten ist, wobei der freie Zustand ein Zustand ist, wenn das Fluorochrom nicht an eine Zelle gebunden ist,
- Bestimmen eines Kompensationsfaktors aus der gemessenen Fluoreszenzstrahlungsintensität in dem freien Zustand,
- Messen der Fluoreszenzstrahlungsintensität in dem gebundenen Zustand einer Zelle, die mit dem Fluorochrom markiert ist, wobei der gebundene Zustand ein Zustand ist, wenn das Fluorochrom an eine Zelle gebunden ist, und
- Anwenden des Kompensationsfaktors auf die gemessene Fluoreszenzstrahlungsintensität in dem gebundenen Zustand.

**Revendications**

1. Procédé de détermination d'un facteur de compensation pour compenser des variations d'une intensité de rayonnement de fluorescence d'un réactif contenant un fluorochrome, le facteur de compensation étant destiné à être appliqué lors d'une mesure d'intensité de rayonnement de fluorescence à l'état lié lorsqu'une cellule est marquée avec le fluorochrome, le procédé étant **caractérisé par** au moins les étapes consistant à :

- mesurer (11) une intensité de rayonnement de fluorescence à l'état libre émise par le réactif contenant le fluorochrome lorsqu'il n'est pas marqué à une cellule avant la mesure d'intensité de rayonnement de fluorescence à l'état lié ; un état libre étant un état dans lequel un fluorochrome n'est pas lié à une cellule, et l'état lié étant un état dans lequel un fluorochrome est lié à une cellule,

- déterminer (12) le facteur de compensation à partir de l'intensité de rayonnement de fluorescence à l'état libre mesurée.

2. Procédé selon la revendication 1, **caractérisé en ce qu'**il comprend au moins deux mesures d'intensité de rayonnement de fluorescence à l'état libre réalisées à des moments différents avant la mesure d'intensité de rayonnement de fluorescence à l'état lié ; le facteur de compensation étant déterminé à partir de valeurs de l'intensité de rayonnement de fluorescence à l'état libre mesurée.

3. Procédé selon la revendication 2, **caractérisé en ce qu'** une mesure d'intensité de rayonnement de fluorescence à l'état libre est réalisée à un moment t1 après la fabrication d'un réactif contenant le fluorochrome, et **en ce qu'**une autre mesure de fluorescence à l'état libre est réalisée à un moment t2, après t1 mais avant la mesure d'intensité de rayonnement de fluorescence à l'état lié, la durée entre t1 et t2 étant supérieure à au moins la durée entre t2 et la mesure d'intensité de rayonnement de fluorescence à l'état lié.

4. Procédé selon la revendication 1, **caractérisé en ce que** le facteur de compensation est déterminé à partir d'une fonction de normalisation prédéterminée ΦN ; au moins une valeur de l'intensité de rayonnement de fluorescence à l'état libre mesurée du réactif contenant le fluorochrome étant au moins un argument de la fonction de normalisation prédéterminée $\Phi_N$.

5. Procédé selon la revendication 4, **caractérisé en ce qu'**une valeur d'une seule intensité de rayonnement de fluorescence à l'état libre mesurée du réactif contenant le fluorochrome est un argument unique de la fonction de normalisation prédéterminée $\Phi_N$.

6. Procédé selon la revendication 4 ou 5, **caractérisé en ce que** la fonction de normalisation prédéterminée $\Phi_N$ comprend une fonction polynomiale, un rapport de fonctions polynomiales, une fonction exponentielle, une fonction logarithmique, une fonction hyperbolique, ou une combinaison de celles-ci.

7. Procédé selon l'une quelconque des revendications 4 à 6, **caractérisé en ce que** la fonction de normalisation prédéterminée $\Phi_N$ est définie par parties.

8. Procédé selon l'une quelconque des revendications précédentes, **caractérisé en ce qu'**une mesure d'intensité de rayonnement de fluorescence à l'état libre est réalisée sur un premier échantillon de réactif ; la mesure d'intensité de rayonnement de fluorescence à l'état lié est réalisée sur un second échantillon de réactif, le premier échantillon de réactif et le second échantillon de réactif provenant d'un seul récipient contenant le fluorochrome.

9. Procédé selon l'une quelconque des revendications précédentes, **caractérisé en ce que** plusieurs étapes consistant à mesurer une intensité de rayonnement de fluorescence à l'état libre sont réalisées pour surveiller la diminution d'intensité de rayonnement de fluorescence.

10. Procédé selon l'une quelconque des revendications précédentes, **caractérisé en ce qu'**un même transducteur optique est utilisé à la fois pour mesurer l'intensité de rayonnement de fluorescence à l'état libre et pour mesurer l'intensité de rayonnement de fluorescence à l'état lié.

11. Procédé selon l'une quelconque des revendications précédentes, **caractérisé en ce qu'**un même spectre d'excitation est utilisé pour mesurer l'intensité de rayonnement de fluorescence à l'état libre et pour mesurer l'intensité de rayonnement de fluorescence à l'état lié.

12. Procédé selon l'une quelconque des revendications précédentes, **caractérisé en ce qu'**une même gamme de longueurs d'onde d'émission est utilisée pour mesurer l'intensité de rayonnement de fluorescence à l'état libre et pour mesurer l'intensité de rayonnement de fluorescence à l'état lié.

13. Procédé selon l'une quelconque des revendications précédentes, **caractérisé en ce que** la concentration de fluorochrome utilisée pour mesurer l'intensité de rayonnement de fluorescence à l'état libre et pour mesurer l'intensité de rayonnement de fluorescence à l'état lié est identique.

**14.** Procédé selon l'une quelconque des revendications précédentes, **caractérisé en ce que** l'étape consistant à mesurer l'intensité de rayonnement de fluorescence à l'état libre est réalisée à partir d'un réactif contenant un seul fluorochrome.

**15.** Procédé selon l'une quelconque des revendications 1 à 13, **caractérisé en ce que** l'étape consistant à mesurer l'intensité de rayonnement de fluorescence à l'état libre est réalisée à partir d'un réactif contenant au moins deux fluorochromes ; et **en ce que** :

> au moins un module d'éclairage est utilisé pour que chaque fluorochrome soit excité avec un module d'éclairage qui a un spectre compatible avec son spectre d'excitation, et/ou
> au moins un module de mesure de fluorescence est utilisé pour que l'émission de fluorescence de chaque fluorochrome soit mesurée avec un module qui a une largeur de bande compatible avec son spectre d'émission.

**16.** Cytomètre en flux optique (1) comprenant une unité de traitement (9) configurée pour :

> - mesurer une intensité de rayonnement de fluorescence à l'état libre d'un fluorochrome contenu dans un réactif, l'état libre étant l'état dans lequel un fluorochrome n'est pas lié à une cellule,
> - déterminer un facteur de compensation à partir de l'intensité de rayonnement de fluorescence à l'état libre mesurée,
> - mesurer l'intensité de rayonnement de fluorescence à l'état lié d'une cellule marquée avec le fluorochrome, l'état lié étant un état dans lequel un fluorochrome est lié à une cellule, et
> - appliquer le facteur de compensation à l'intensité de rayonnement de fluorescence à l'état lié mesurée.

FIG. 1

10 — | Considering a reagent containing a fluorochrome |

11 — | Measuring a free state fluorescence of the fluorochrome |

12 — | Determining a compensation factor |

13 — | Considering the reagent containing a fluorochrome |

14 — | Measuring a bound state fluorescence of the fluorochrome |

15 — | cell characterization |

FIG. 2

Free State Fluorescence

FIG. 3

Bound State Fluorescence

FIG. 4

**t =00 month**
**No compensation**

RES006017_dif

3270pts

88

ALL

Gy =88

FIG. 5a

**t =00 month**
**Compensation**

RES006017_dif

3270pts

87

ALL

Gy =87

FIG. 5b

**t=10 months**
**No compensation**

RES007307_dif

3395pts

50

ALL

Gy = 50

FIG. 6a

**t=10 months**
**Compensation**

RES007307_dif

3394pts

87

ALL

Gy =87

FIG. 6b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3684377 A, Katmensky
- US 3916205 A, Kleinerman
- US 4957870 A
- US 5821127 A
- US 5891731 A
- US 6004816 A
- EP 2175340 A
- US 9448175 B
- US 2012010822 A1, Yasunobu

**Non-patent literature cited in the description**

- **HULSPAS**. Flow Cytometry and the Stability of Phycoerythrin-Tandem Dye Conjugates. *Cytometry Part A*, 11 November 2009, vol. 75, 966-972